# EUROPÄISCHE PATENTANMELDUNG

(11) **EP 2 602 744 A1**
(43) Veröffentlichungstag der Anmeldung: **12.06.2013**
(21) Anmeldenummer: 11009683.1
(22) Anmeldetag: 08.12.2011
(51) Int. Cl.: G06K 9/46, G06K 9/00

(54) **Verfahren zum Erkennen und Verfolgen von Fahrspurmarkierungen**

(71) Anmelder: Delphi Technologies, Inc., Troy MI 48007 (US)
(72) Erfinder: Meuter, Mirko, 40699 Erkrath (DE); Zhao, Kun, 47059 Duisburg (DE)
(74) Vertreter: Manitz, Finsterwald & Partner GbR

(57) **Zusammenfassung**

Bei einem Verfahren zum Erkennen und Verfolgen von Fahrspurmarkierungen von einem Kraftfahrzeug aus wird mittels einer Bilderfassungseinrichtung in regelmäßigen Zeitabständen ein Bild eines vor dem Kraftfahrzeug befindlichen Verkehrsraumes erfasst. In dem erfassten Bild werden Bildbereiche identifiziert, welche einer zu verfolgenden Fahrspurmarkierung entsprechen. Es wird ein Satz von Kontrollpunkten definiert, welche sich auf einem geschätzten Verlauf der Fahrspurmarkierung in der Fahrbahnebene befinden. Die zeitliche Änderung des Verlaufs der Fahrspurmarkierung wird mittels eines Zustandsschätzers verfolgt, der einen Zustandsvektor verwendet, dessen Komponenten zumindest den Satz von Kontrollpunkten umfassen. Für die Zustandsschätzung wird eine Vorhersage für den Zustandsvektor generiert und die Vorhersage anhand eines Splines mit der in einem zeitlich nachfolgenden Bild identifizierten Fahrspurmarkierung verglichen. Der Spline verläuft dabei durch die Kontrollpunkte und ist durch deren Lage in der Fahrbahnebene vollständig definiert.

## Beschreibung

Die vorliegende Erfindung betrifft ein so genanntes Tracking-Verfahren, genauer gesagt ein Verfahren zum Erkennen und Verfolgen von Fahrspurmarkierungen von einem Kraftfahrzeug aus. Dabei ist an dem Kraftfahrzeug eine Bilderfassungseinrichtung wie z.B. eine Kamera angeordnet, mittels derer in regelmäßigen Zeitabständen ein Bild eines vor dem Kraftfahrzeug befindlichen Verkehrsraumes erfasst wird.

Das Tracking von Fahrspurmarkierungen ist für verschiedene Arten von Fahrerassistenzsystemen in modernen Kraftfahrzeugen bedeutsam. Beispielsweise kann ein Spurhalteassistent (lane departure warning, LDW) das Tracking von Fahrspurmarkierungen dazu verwenden, die Position des Kraftfahrzeugs innerhalb der Fahrspur zu bestimmen und bei einem zu starken Annähern an den Fahrspurrand ein Warnsignal auszugeben. Es sind auch Systeme zur Spurhalteunterstützung (lane keeping support, LKS) bekannt, welche das Halten der aktuellen Fahrspur durch kontinuierlichen Lenk-, Brems- und/oder Antriebsstrangeingriff unterstützen.

Für ein zuverlässiges Tracking von Fahrspurmarkierungen muss der tatsächliche Fahrspurverlauf durch ein mathematisches Modell näherungsweise beschrieben werden. Es ist jedoch schwierig, ein Modell festzulegen, das einfache Berechnungen ermöglicht und das ferner eine ausreichende Flexibilität und Robustheit aufweist. Ein gängiges Verfahren sieht vor, den Fahrspurverlauf durch Klothoiden oder Spinnkurven anzunähern. Es hat sich jedoch gezeigt, dass derartige Klothoiden-Modelle insbesondere komplexe Fahrspurverläufe, wie sie z.B. im Bereich von Baustellen oder in engen Kurven auftreten, nur relativ schlecht wiedergeben. Komplexere Modelle könnten hier Abhilfe schaffen. Jedoch stehen diese in Konflikt zu der Anforderung eines bewältigbaren Rechenaufwands. Ein weiteres Problem besteht darin, dass sich Fahrspurmarkierungen oft verzweigen oder vereinigen, beispielsweise bei Aus- oder Einfahrten auf Autobahnen. Für das Tracking-System ist es schwierig, in solchen Situationen die korrekte zu verfolgende Fahrspurmarkierung zu identifizieren.

Der vorliegenden Erfindung liegt daher die Aufgabe zugrunde, ein Verfahren der eingangs genannten Art zur Verfügung zu stellen, welches hinsichtlich unterschiedlicher Formen von Straßenverläufen ausreichend flexibel ist und welches trotz geringem Rechenaufwand zuverlässige Ergebnisse liefert.

Diese Aufgabe wird erfindungsgemäß durch ein Verfahren mit den Merkmalen des Anspruchs 1 gelöst.

Erfindungsgemäß werden in dem erfassten Bild mittels eines Bildverarbeitungssystems Bildbereiche identifiziert, welche einer zu verfolgenden Fahrspurmarkierung entsprechen. Es wird dann ein Satz von Kontrollpunkten definiert, welche sich auf einem geschätzten Verlauf der Fahrspurmarkierung in der Fahrbahnebene befinden. Die zeitliche Änderung des Verlaufs der Fahrspurmarkierung wird mittels eines Zustandsschätzers verfolgt, der einen Zustandsvektor verwendet, dessen Komponenten zumindest den Satz von Kontrollpunkten umfassen. Bei dem Verfolgen der zeitlichen Änderung des Verlaufs der Fahrspurmarkierung wird eine Vorhersage für den Zustandsvektor generiert und diese Vorhersage wird anhand eines Splines, welcher durch die Kontrollpunkte verläuft und durch deren Lage in der Fahrbahnebene vollständig definiert ist, mit der in einem zeitlich nachfolgenden Bild identifizierten Fahrspurmarkierung verglichen. Anhand des Ergebnisses des Vergleichs wird der Zustandsvektor aktualisiert.

Der Verlauf der Fahrspurmarkierung wird also nicht durch Klothoiden-Kurven modelliert, sondern durch einen in Abhängigkeit von geschätzten Kontrollpunkten definierten Spline. Eine Spline-Kurve ist wesentlich flexibler als eine Klothoiden-Kurve, sodass durch das erfindungsgemäße Tracking-Verfahren eine größere Vielfalt an tatsächlich vorkommenden Markierungsverläufen ausreichend präzise nachgebildet werden kann. Insbesondere in engen Kurven oder in komplizierten Fahrsituationen ist ein Spline-Modell einem Klothoiden-Modell überlegen. Der Rechenaufwand wird erfindungsgemäß jedoch dadurch gering gehalten, dass in dem Zustandsvektor lediglich ein diskreter Satz von stationären Kontrollpunkten mitgeführt wird. Spezielle zusätzliche Parameter zur Charakterisierung der Spline-Kurve müssen dagegen nicht in dem Zustandsvektor mitgeführt werden, da der Spline durch den Satz von Kontrollpunkten vollständig definiert ist. Ein besonderer Vorteil des Spline-Modells besteht darin, dass sich eine Spline-Kurve gut für die Weiterverarbeitung in zusätzlichen Fahrerassistenzsystemen eignet, beispielsweise als unterstützende Eingabe zum Erzeugen einer digitalen Karte.

Zustandsschätzer dienen der näherungsweisen Projektion eines Systemzustands in die Zukunft und sind auf dem Fachgebiet grundsätzlich bekannt. Konkret besitzt ein bei dem erfindungsgemäßen Verfahren eingesetzter Zustandsschätzer eine Prädiktor-Korrektor-Struktur.

Es sei darauf hingewiesen, dass beim Identifizieren der einer Fahrspurmarkierung entsprechenden Bildbereiche nicht notwendigerweise die vollständige Fahrspurmarkierung erfasst werden muss. Es reicht aus, die Position möglicher Fahrspurmarkierungen an einzelnen Stellen, z.B. an vorgegebenen Bildschirmzeilen, zu detektieren. Es wird dann die aufgrund des Zustandsvektors und der Interpolations-/Extrapolationsvorschrift erwartete Position an der betreffenden Stelle - z.B. Bildschirmzeile - vorhergesagt und mit dem zugehörigen Messwert verglichen. Die Aktualisierung der Kontrollpunkte des Zustandsvektors erfolgt im Folgenden derart, dass die Differenzen zwischen den Messpunkten und den vorhergesagten Positionen über die Zeit minimiert werden.

Vorteilhafte Ausführungsformen der Erfindung können den abhängigen Ansprüchen sowie der nachfolgenden Beschreibung entnommen werden.

Gemäß einer Ausgestaltung der Erfindung werden beim Identifizieren der Bildbereiche jeweils einzelne Teilstücke der zu verfolgenden Fahrspurmarkierung erkannt, wobei der Satz von Kontrollpunkten anhand der erkannten Teilstücke definiert wird. Das Identifizieren der einer Fahrspurmarkierung entsprechenden Bildbereiche erfolgt also z.B. derart, dass stückweise Einzelerkennungen vorgenommen werden und diese stückweisen Einzelerkennungen zu einem geschätzten Verlauf der gesamten Fahrspurmarkierung kombiniert werden. Insbesondere wird dabei jeweils eine Position und eine Steigung berücksichtigt. D.h. es werden beispielsweise die Position und die Steigung der Fahrspurmarkierung für eine bestimmte Bildzeile vorhergesagt und die Position der Fahrspurmarkierung in der entsprechenden Bildzeile gemessen.

Vorzugsweise enthält der Zustandsvektor als zusätzliche Komponente einen Wert für die Breite der zu verfolgenden Fahrspurmarkierung. Besonders bevorzugt ist es, dass der Zustandsvektor als Komponenten ausschließlich den Satz von Kontrollpunkten und den Wert für die Breite der zu verfolgenden Fahrspurmarkierung enthält. Dadurch ergibt sich ein besonders geringer Rechenaufwand.

Insbesondere kann der Satz von Kontrollpunkten höchstens 15 Kontrollpunkte, bevorzugt höchstens 10 Kontrollpunkte und besonders bevorzugt höchstens 5 Kontrollpunkte enthalten. Das Modell des Straßenverlaufs wird also auf vergleichsweise wenige Ortskoordinaten in der Fahrbahnebene gestützt. Bei einer geringen Anzahl an Kontrollpunkten kommt die glättende Eigenschaft des Splines besonders zum Tragen. Weiterhin sind lediglich wenige Vektorkomponenten bei der Zustandsschätzung zu berücksichtigen. Dies ermöglicht trotz der Flexibilität und der Robustheit des Modells eine relativ einfache Berechnung.

Als Spline kann ein lokaler Spline, insbesondere ein Catmull-Rom-Spline, verwendet werden. Ein Catmull-Rom-Spline ist durch vier Kontrollpunkte definiert, wobei die Differenz zwischen benachbarten Punkten dazu herangezogen wird, die Steigung an einem bestimmten Punkt zu bestimmen. Somit ist ein Catmull-Rom-Spline insofern besonders vorteilhaft, als er vollständig auf den Kontrollpunkten und nicht auf zusätzlichen Steigungswerten beruht. Da die Kontrollpunkte direkt auf der Spline-Kurve liegen, wird eine gegebenenfalls durchzuführende Extrapolation erleichtert. Grundsätzlich könnte auch ein Hermite-Spline oder ein anderer kubischer Spline verwendet werden.

Bei der Zustandsschätzung hat sich die Verwendung eines Kalman-Filters, insbesondere eines Extended-Kalman-Filters (EKF) oder eines Unscented-Kalman-Filters (UKF), als besonders vorteilhaft erwiesen. Da sich die perspektivische Projektion von Raumpunkten in die Bildebene nicht durch eine lineare Gleichung beschreiben lässt, kommen nur Varianten des Kalman-Filters in Frage, die es erlauben, auch Zustände nichtlinearer Systeme zu schätzen. Das erweiterte Kalman-Filter beruht auf einer Linearisierung der Systemgleichungen und ist daher insbesondere für kleine Abtastintervalle ein verlässlicher Schätzer. Prinzipiell könnte auch die Verwendung eines Partikelfilters, eines Sigmapunkt-Kalman-Filters oder eines anderen geeigneten Filters erwogen werden.

Gemäß einer Ausführungsform der Erfindung wird bei einem Vorüberfahren des Kraftfahrzeugs an einem Kontrollpunkt dieser Kontrollpunkt aus dem Zustandsvektor entfernt, werden die verbleibenden Kontrollpunkte um eine Komponentenposition in dem Zustandsvektor verschoben und wird ein neuer Kontrollpunkt in den Zustandsvektor eingefügt, welcher sich in Fahrtrichtung gesehen vor den verbleibenden Kontrollpunkten befindet. Somit werden Kontrollpunkte, die sich hinter dem Kraftfahrzeug befinden und für das Tracking nicht mehr relevant sind, rechtzeitig gelöscht. Gleichzeitig wird der Tracking-Bereich nach vorne erweitert, sodass sich also der Zustandsvektor nach Art eines Schieberegisters mit dem Fahrzeug mitbewegt. Auf diese Weise werden stets nur relevante Kontrollpunkte bei der Zustandsschätzung berücksichtigt. Es versteht sich, dass auch jeweils mehrere Kontrollpunkte gleichzeitig hinzugefügt bzw. entfernt werden können.

Der neue Kontrollpunkt kann insbesondere durch eine Extrapolation des Splines ermittelt werden. D.h. die aktuelle Spline-Kurve wird in Fahrtrichtung gesehen nach vorne um ein bestimmtes Stück erweitert und ein Kontrollpunkt wird auf dieses erweiterte Kurvenstück gesetzt. Somit kann die zur Aktualisierung der bestehenden Kontrollpunkte verwendete Spline-Kurve in vorteilhafter Weise zusätzlich auch zur Extrapolation, d.h. zum Festlegen neuer Kontrollpunkte, genutzt werden.

Weiterhin kann jedem Kontrollpunkt ein Rauschterm zugeordnet werden, welcher ein Maß für die Unsicherheit der Position des Kontrollpunkts bezüglich der tatsächlichen Position der Fahrspurmarkierung darstellt, wobei für den neuen Kontrollpunkt einerseits und für die verbleibenden Kontrollpunkte andererseits jeweils unterschiedliche Rauschterme gewählt werden. Insbesondere kann der Rauschterm für den neuen Kontrollpunkt eine Summe aus einem allen Kontrollpunkten gemeinsamen Rauschterm und einem zusätzlichen Rauschterm umfassen. Dadurch kann insbesondere erreicht werden, dass im Verlauf der Berechnung bei neu hinzugefügten Kontrollpunkten von einer höheren Unsicherheit ausgegangen wird als bei bestehenden Kontrollpunkten und somit ein größerer Spielraum zur Anpassung besteht. Dies ist vorteilhaft, da die neuen Kontrollpunkte noch nicht messtechnisch überprüft wurden. Bei der Aktualisierung unterliegen also neue Kontrollpunkte geringeren Beschränkungen als bestehende Kontrollpunkte. Dennoch sollten durch den Rauschterm Anpassungen der neuen Kontrollpunkte auf einen vorgegebenen Bereich in der Umgebung des Anfangswerts beschränkt werden.

Dem Spline können auch mittels einer Extrapolation ein oder mehrere Kurvenabschnitte hinzugefügt werden, welche den geschätzten Verlauf der Fahrspurmarkierung vor dem ersten Kontrollpunkt und/oder nach dem letzten Kontrollpunkt darstellen. Während sich der Spline an sich also vorzugsweise auf eine reine Interpolation bezieht und lediglich zwischen dem ersten Kontrollpunkt und dem letzten Kontrollpunkt definiert ist, kann die das Modell repräsentierende Kurve auch extrapolierte Zusatzabschnitte umfassen, welche sich um ein vorgegebenes Stück von dem ersten Kontrollpunkt und/oder von dem letzten Kontrollpunkt aus von der Interpolationskurve weg erstrecken. Grundsätzlich spielt es keine Rolle, wie die Kontrollpunkte in dem Satz von Kontrollpunkten bezüglich der Fahrtrichtung nummeriert sind. D.h. der erste Kontrollpunkt kann sich direkt vor dem Fahrzeug befinden, wohingegen der letzte Kontrollpunkt die größte Entfernung zum Fahrzeug aufweist, oder der am weitesten von dem Fahrzeug entfernte Kontrollpunkt kann als erster Kontrollpunkt bezeichnet werden.

Vorzugsweise wird der Extrapolation eine sich am Ende des Definitionsbereichs des Splines gleichmäßig fortsetzende Krümmung des geschätzten Verlaufs der Fahrspurmarkierung zugrunde gelegt. Dies ermöglicht einen glatten Übergang zwischen interpolierten und extrapolierten Kurvenabschnitten und somit eine besonders robuste Modellierung unter Berücksichtigung des Umstands, dass sich die Krümmung eines Straßenverlaufs üblicherweise nicht abrupt ändert.

Gemäß einer weiteren Ausführungsform der Erfindung umfasst das Identifizieren von einer zu verfolgenden Fahrspurmarkierung entsprechenden Bildbereichen in dem erfassten Bild, das die identifizierten Bildbereiche jeweils einer von mehreren in einer Liste geführten Fahrspurmarkierungen zugeordnet werden. Dies kann dadurch erfolgen, dass mittels des Bildverarbeitungssystems in bestimmten Bildabschnitten, in welchen die betreffende Fahrspurmarkierung erwartet wird, nach bestimmten Merkmalen wie z.B. Kanten gesucht wird und die erkannten Merkmale dann als Messwerte derjenigen Fahrspurmarkierung in der Liste zugeordnet werden, welche den Messwerten am nächsten liegt. Es findet also ein Tracking aller im Bild erkennbaren Fahrspurmarkierungen statt, sodass auch Kandidaten für künftig relevant werdende Markierungen rechtzeitig detektiert und mitberücksichtigt werden.

Gemäß einer weiteren Ausführungsform der Erfindung wird bei einem Überlappen von zwei in der Liste geführten Fahrspurmarkierungen ein den Beginn des Überlappens repräsentierender Kontrollpunkt als Verschmelzungspunkt gespeichert und die beiden Fahrspurmarkierungen werden entweder vor oder nach dem Verschmelzungspunkt fusioniert. Mit anderen Worten werden bis zu dem Verschmelzungspunkt - entweder in Fahrtrichtung oder entgegen der Fahrtrichtung gesehen - die beiden Fahrspurmarkierungen als getrennte Objekte behandelt und ab dem Verschmelzungspunkt als ein gemeinsames Objekt. Ab dem Verschmelzungspunkt konkurrieren die Fahrspurmarkierungen also nicht mehr um die Messwertzuordnungen. Auf diese Weise können auch Situationen zuverlässig gehandhabt werden, in welchen zwei Fahrspurmarkierungen aufeinander zulaufen und verschmelzen oder in welchen eine Verzweigung im Fahrspurmarkierungsverlauf auftritt.

Das Fusionieren kann insbesondere dadurch bewerkstelligt werden, dass eine Fahrspurmarkierung als zu verfolgende "Master"-Markierung bestimmt wird und die andere Fahrspurmarkierung als "Slave"-Markierung bestimmt wird, welche in der Liste beibehalten, aber bei dem Schritt des Identifizierens von einer Fahrspurmarkierung entsprechenden Bildbereichen nicht berücksichtigt wird. Die Messwerte werden also nur der Master-Markierung zugeordnet und an die Slave-Markierung weitergereicht, sodass es zu keinem Konkurrieren um Messwertzuordnungen zwischen den beiden Markierungen kommt. Das Beibehalten der Slave-Markierung ist jedoch aus Systemgründen vorteilhaft. Vorzugsweise wird diejenige Fahrspurmarkierung als zu verfolgende Master-Markierung bestimmt, welche die geringere Abweichung zu den in einem erfassten Bild identifizierten, einer zu verfolgenden Fahrspurmarkierung entsprechenden Bildbereichen aufweist. Mit anderen Worten wird bevorzugt geprüft, welche der überlappenden Fahrspurmarkierungen näher an den Messwerten liegt und diese Markierung wird nachfolgend als Master-Markierung erklärt. Bei einem Vorüberfahren des Kraftfahrzeugs an dem Verschmelzungspunkt wird die Slave-Markierung vorzugsweise aus der Liste entfernt, da sie ab diesem Zeitpunkt nicht mehr relevant ist.

Beim Definieren des Satzes von Kontrollpunkten kann ein gleichmäßiger Abstand zwischen den Kontrollpunkten in der Fahrbahnebene gewählt werden. Dies ermöglicht eine zuverlässig gestützte Modellierung des Straßenverlaufs.

Gemäß einer Ausführungsform der Erfindung wird die aktuelle Geschwindigkeit des Kraftfahrzeugs ermittelt und der Abstand zwischen den Kontrollpunkten wird in Abhängigkeit von der Geschwindigkeit gewählt. Vorzugsweise wird der Abstand umso geringer gewählt, je geringer die Geschwindigkeit ist. Bei einer Verringerung des Abstandes der Kontrollpunkte und gleichbleibender Dimension des Zustandsvektors kann das Tracking nur in einem verkleinerten Bereich vor dem Kraftfahrzeug durchgeführt werden. Bei geringen Fahrgeschwindigkeiten ist eine große Tracking-Entfernung jedoch ohnehin nicht maßgeblich. Der Vorteil einer Verringerung des Abstands zwischen den Kontrollpunkten besteht insbesondere in der gesteigerten Kontrollpunktdichte, sodass geometrische Änderungen wie z.B. enge Kurven besser modelliert werden können. Dies ist bei geringen Fahrgeschwindigkeiten, z.B. im Stadtverkehr, besonders wichtig. Bei höheren Fahrgeschwindigkeiten, z.B. beim Fahren auf Autobahnen, ist es hingegen von Vorteil, einen größeren Bereich vor dem Fahrzeug zu kontrollieren.

Die Veränderung des Abstands zwischen den Kontrollpunkten ist mit einem Resampling, also einer Neuabtastung der Modellkurve, verbunden. Da dies relativ rechenaufwändig ist, ist es bevorzugt, die Anpassung des Abstands an die Geschwindigkeit nur in bestimmten Einzelsituationen durchzuführen. Beispielsweise kann ein Wechsel zwischen lediglich zwei Betriebszuständen, einem Hochgeschwindigkeitszustand und einem Niedriggeschwindigkeitszustand, vorgesehen sein. D.h. der Abstand zwischen den Kontrollpunkten wird lediglich dann von einem ersten höheren Betrag auf einen zweiten niedrigeren Betrag verringert, wenn die Geschwindigkeit des Kraftfahrzeugs einen vorbestimmten Schwellenwert unterschreitet, wobei vorzugsweise der zweite Betrag der Hälfte des ersten Betrags entspricht. Dieser Wert hat sich als besonders günstig erwiesen.

Eine weitere Ausführungsform der Erfindung sieht vor, dass unter Verwendung des Splines eine die Umgebung des Kraftfahrzeugs darstellende Straßenkarte erzeugt wird. Ein ohnehin im Rahmen des Trackings erzeugter Spline wird somit in vorteilhafter Weise dazu verwendet, die Erzeugung einer digitalen Umgebungskarte, beispielsweise in Zusammenarbeit mit weiteren Umfeldsensoren auf Grundlage von Radar, Lidar, GPS (Global Positioning System) oder dergleichen, zu verbessern. Von besonderem Vorteil ist hierbei, dass die Daten durch Verwendung des glättenden Splines bereits in einem hierfür geeigneten Format vorliegen und insbesondere ohne Schwierigkeiten mit weiteren Eingangsdaten fusioniert werden können.

Die Kontrollpunkte können weiterhin einer Eigenbewegungskompensation unterzogen werden, welche insbesondere auf einem linearen Bewegungsmodell beruht. Die Eigenbewegungskompensation ermöglicht es, in Weltkoordinaten zu arbeiten, wobei die Kontrollpunkte direkt auf der Fahrspurmarkierung liegen und als ortsfest angesehen werden können. Dadurch dass die Positionen der Kontrollpunkte in Weltkoordinaten konstant gehalten werden, erübrigt sich insbesondere ein wiederholtes rechenaufwändiges Resampling. Das lineare Bewegungsmodell kann sich insbesondere aus einem Term für eine Fortbewegung in Fahrtrichtung mit konstanter Geschwindigkeit und einem Term für eine linearisierte Rotation des Kraftfahrzeugs für Lenkbewegungen zusammensetzen. Ein lineares Bewegungsmodell gewährleistet einen geringen Rechenaufwand, wobei für die meisten Anwendungen im Bereich des Trackings von Fahrspurmarkierungen ein lineares Bewegungsmodell ausreichend zuverlässige Ergebnisse liefert.

Die Erfindung betrifft auch ein Computerprogramm mit Programmcodemitteln zur Durchführung eines wie vorstehend beschriebenen Verfahrens, wenn das Computerprogramm auf einem Computer oder einer entsprechenden Recheneinheit ausgeführt wird.

Weiterhin betrifft die Erfindung ein Computerprogrammprodukt mit Programmcodemitteln, die auf einem computerlesbaren Datenträger gespeichert sind, zur Durchführung eines wie vorstehend beschriebenen Verfahrens, wenn das Computerprogramm auf einem Computer oder einer entsprechenden Recheneinheit ausgeführt wird.

Schließlich betrifft die Erfindung auch eine Vorrichtung zum Erkennen und Verfolgen von Fahrspurmarkierungen von einem Kraftfahrzeug aus, mit einer an dem Kraftfahrzeug angeordneten Bilderfassungseinrichtung zur Aufnahme eines Bildes und einer Datenverarbeitungseinrichtung, die zur Durchführung des oben genannten Verfahrens ausgebildet ist.

Die Erfindung wird nachfolgend beispielhaft unter Bezugnahme auf die beigefügten Figuren beschrieben.
- Fig. 1: zeigt eine Draufsicht auf einen Verkehrsraum mit einem Kraftfahrzeug, welches eine erfindungsgemäße Vorrichtung zum Erkennen und Verfolgen von Fahrspurmarkierungen umfasst.

- Fig. 2: zeigt ein Bild, welches durch eine an dem Kraftfahrzeug gemäß Fig. 1 angeordnete Bilderfassungseinrichtung aufgenommen wurde.
- Fig. 3: zeigt eine Verschmelzung von zwei Fahrspurmarkierungen.

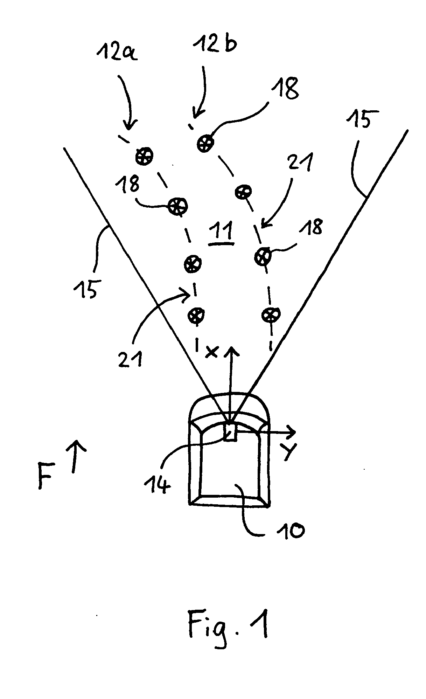

Gemäß Fig. 1 bewegt sich ein Kraftfahrzeug 10 auf der Fahrspur 11 einer Straße in einer Fahrtrichtung F vorwärts. Die Fahrspur 11 ist durch eine linke Fahrspurmarkierung 12a und durch eine rechte Fahrspurmarkierung 12b begrenzt. In einem vorderen Bereich des Fahrzeughimmels ist eine Kamera 14 angebracht, welche fortlaufend ein Bild des vor dem Kraftfahrzeug 10 befindlichen Verkehrsraumes erfasst, wie durch die Sichtstrahlen 15 dargestellt ist. Durch die Kameraposition wird das Weltkoordinatensystem x, y aufgespannt. Weiterhin ist die Kamera 14 mit einem nachgeordneten Bildverarbeitungs-Computer gekoppelt, welcher in Fig. 1 jedoch nicht dargestellt ist.

Die Kamera 14 und der zugehörige Bildverarbeitungs-Computer sind Teil eines Fahrerassistenzsystems, beispielsweise eines Systems zum Unterstützen des Spurhaltens (Spurhalteassistent, lane departure warning system, LDW). Um den Fahrer des Fahrzeugs 10 bei einem drohenden Verlassen der Fahrspur 11 rechtzeitig zu warnen, werden die die Fahrspur 11 begrenzenden Fahrspurmarkierungen 12a, 12b fortlaufend einem Tracking-Prozess unterzogen, wie nachfolgend näher ausgeführt wird.

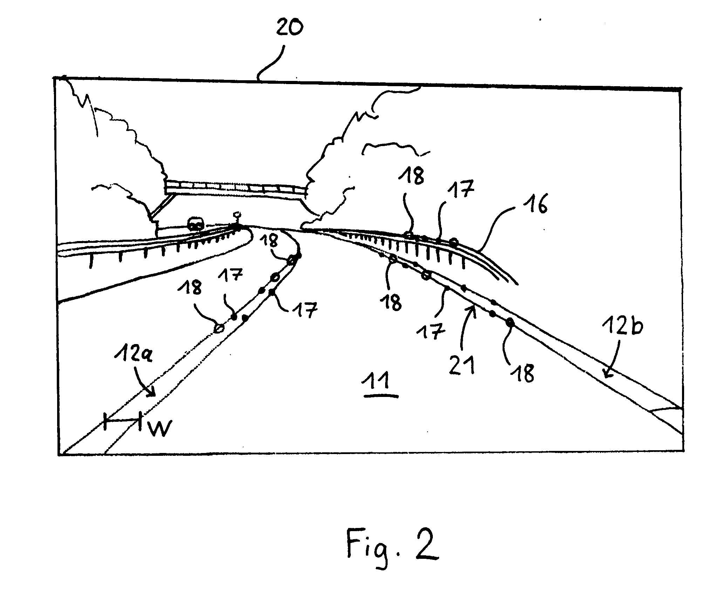

Ein Beispiel für ein von der Kamera 14 erfasstes Bild 20 des vor dem Kraftfahrzeug 10 befindlichen Verkehrsraumes ist in Fig. 2 vereinfacht dargestellt. Zunächst werden in dem erfassten Bild 20 mittels geeigneter, auf dem Fachgebiet grundsätzlich bekannter Bildverarbeitungsalgorithmen alle in dem Verkehrsraum vorhandenen Fahrspurmarkierungen 12a, 12b detektiert und mit einer Liste von zu verfolgenden Fahrspurmarkierungen abgeglichen. Wie aus Fig. 2 hervorgeht, wird hierbei auch die neben dem rechten Fahrspurrand befindliche Leitplanke 16 detektiert und sicherheitshalber als möglicher Kandidat für eine Fahrspurmarkierung mitberücksichtigt. Die Regionen innerhalb des Bildes, in welchen die Detektion von Fahrspurmarkierungen durchgeführt wird, sind auf Basis empirischer Erkenntnisse gewählt. Die Stellen detektierter Fahrspurmarkierungen im Bild 20 sind in Fig. 2 als gefüllte Kreise dargestellt und repräsentieren Messpunkte 17, welche dem Tracking-Verfahren zugrunde gelegt werden. Jeder Messpunkt 17 wird in einem weiteren Schritt einer der in der Liste geführten Fahrspurmarkierungen 12a, 12b, 16 zugeordnet.

Der Verlauf der beiden Fahrspurmarkierungen 12a, 12b wird durch einen Satz von fünf Kontrollpunkten 18 abgebildet, welche sich auf dem geschätzten Verlauf der Fahrspurmarkierung 12a, 12b in der Fahrbahnebene befinden und in Weltkoordinaten einen gleichmäßigen Abstand voneinander aufweisen. In Fig. 2 sind die Kontrollpunkte 18 als nicht gefüllte Kreise dargestellt. Mittels eines Catmull-Rom-Splines 21 erfolgt eine abschnittsweise Interpolation zwischen den einzelnen Kontrollpunkten 18. Der Catmull-Rom-Spline 21 ist ausschließlich durch die Koordinaten der Kontrollpunkte 18 in Weltkoordinaten definiert.

Das eigentliche Tracking, also das Verfolgen der zeitlichen Änderung des Verlaufs der Fahrspurmarkierungen 12a, 12b erfolgt mittels eines Zustandsschätzers, welcher auf einem Extended Kalman-Filter beruht. Als Zustandsvektor werden die Koordinaten der Kontrollpunkte 18 in der Fahrbahnebene gewählt, wobei als zusätzliche Komponente des Zustandsvektors ein Wert für die Breite W der jeweiligen Fahrspurmarkierung 12a, 12b angefügt wird. Das rekursive Abgleichen des Modells mit den Messpunkten 17 unter Verwendung des Kalman-Filters erfolgt anhand des durch alle Kontrollpunkte 18 hindurch verlaufenden Catmull-Rom-Splines 21. Die Messpunkte 17 müssen sich also nicht an den gleichen Stellen befinden wie die Kontrollpunkte 18, sondern es können auch Zwischenstellen oder extrapolierte Bereiche überprüft werden. Im Rahmen der Zustandsschätzung wird eine Vorhersage für den Zustandsvektor - also im Wesentlichen für die Lage der Kontrollpunkte 18 - generiert. Diese Vorhersage wird anhand des Catmull-Rom-Splines mit der betreffenden, in einem zeitlich nachfolgenden Bild identifizierten Fahrspurmarkierung 12a, 12b verglichen und der Zustandsvektor wird anhand des Ergebnisses des Vergleichs aktualisiert, also unter Berücksichtigung der aktuellen Messpunkte 17 korrigiert.

Da für einen Spurhalteassistenten stets nur ein bestimmter Bereich unmittelbar vor dem Kraftfahrzeug 10 zu überwachen ist, wird bei einem Vorüberfahren des Kraftfahrzeugs 10 an einem der Kontrollpunkte 18 dieser Kontrollpunkt 18 aus dem Zustandsvektor entfernt und die verbleibenden Kontrollpunkte 18 werden um eine Komponentenposition in dem Zustandsvektor verschoben. Ferner wird ein neuer Kontrollpunkt 18 in den Zustandsvektor eingefügt, welcher sich in Fahrtrichtung F gesehen vor den verbleibenden Kontrollpunkten 18 befindet. Der neue Kontrollpunkt 18 wird dabei durch eine Extrapolation des Splines 21 ermittelt, welche auf einer sich am jeweiligen Ende des Definitionsbereichs des Splines 21 gleichmäßig fortsetzenden Krümmung beruht. Dem neuen Kontrollpunkt 18 wird dabei eine Rauschmatrix zugeordnet, welche sich aus der Summe einer allen Kontrollpunkten gemeinsamen regulären Rauschmatrix und einer zusätzlichen Rauschmatrix ergibt. Somit wird dem neuen Kontrollpunkt 18 ein größerer Spielraum zur Anpassung zugestanden, um dem Umstand Rechnung zu tragen, dass die Kontrollpunkte 18 im extrapolierten Bereich unsicherer sind als die - bereits über das Modell abgeglichenen - Kontrollpunkte 18 im Interpolationsbereich. Die Schätzung des Verlaufs der Fahrspurmarkierungen 12a, 12b wird weiterhin um ein vorbestimmtes Stück über den fahrzeugfernen letzten Kontrollpunkt 18 hinaus erweitert, indem im Rahmen der Extrapolation ein Kurvenabschnitt hinzugefügt wird, welcher den geschätzten Verlauf der Fahrspurmarkierung 12a, 12b nach dem letzten Kontrollpunkt 18 darstellt. Auch diese Extrapolation beruht auf einer sich am Ende des Definitionsbereichs des Splines 21 gleichmäßig fortsetzenden Krümmung.

Wie vorstehend erwähnt wird beim Definieren des Satzes von Kontrollpunkten 18 üblicherweise ein gleichmäßiger Abstand zwischen den einzelnen Kontrollpunkten 18 gewählt. Da jedoch bei geringen Geschwindigkeiten des Kraftfahrzeugs 10 das Modellieren enger Kurven notwendig werden kann, ist der Abstand zwischen Kontrollpunkten 18 vorzugsweise geschwindigkeitsabhängig. Genauer gesagt wird die aktuelle Geschwindigkeit des Kraftfahrzeugs 10 mittels eines in Fig. 1 nicht dargestellten Geschwindigkeitssensors ermittelt und bei einem Unterschreiten eines vorbestimmten Geschwindigkeits-Schwellenwerts wechselt das System von einem Hochgeschwindigkeitsmodus in einen Niedriggeschwindigkeitsmodus, in welchem der Abstand zwischen den Kontrollpunkten 18 auf die Hälfte des ursprünglichen Betrags reduziert wird. Hierfür ist ein Resampling erforderlich, welches mit einem relativ hohen Rechenaufwand verbunden ist. Daher sorgt eine Hysterese-Funktion dafür, dass in Fahrsituationen, in welchen die Geschwindigkeit um den Schwellenwert pendelt, kein unerwünscht häufiger Wechsel zwischen dem Hochgeschwindigkeitsmodus und dem Niedriggeschwindigkeitsmodus auftritt.

Um die Lage der Kontrollpunkte 18 in Weltkoordinaten x, y konstant zu halten, werden sie einer Eigenbewegungskompensation unterzogen, welche die Fahrzeugbewegung berücksichtigt. Die Eigenbewegungskompensation kann auf einem linearen Bewegungsmodell beruhen, wobei beispielsweise eine konstante Geschwindigkeit des Kraftfahrzeugs 10 in der Fahrtrichtung F und zusätzlich eine geringfügige Winkeländerung zwischen einzelnen durch die Kamera 14 vorgegebenen Erfassungszeitpunkten angenommen wird.

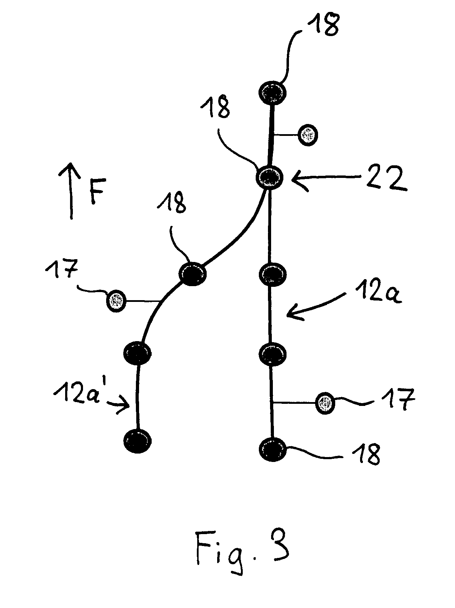

Sollte es, wie in Fig. 3 schematisch dargestellt, zu einer Überlappung einzelner Fahrspurmarkierungen 12a, 12a' kommen, wird eine spezielle Logik angewandt, um unerwünschte Mehrdeutigkeiten zu vermeiden. Im Rahmen dieser Logik wird zunächst der Kontrollpunkt 18 am Beginn des Überlappens als Verschmelzungspunkt 22 gespeichert. In Fahrtrichtung F gesehen vor dem Verschmelzungspunkt 22 werden die beiden Fahrspurmarkierungen 12a, 12a' als getrennte Objekte gehandhabt, denen in gewohnter Weise Messwerte zugeordnet werden. In Fahrtrichtung F gesehen vor dem Verschmelzungspunkt 22 werden die beiden Fahrspurmarkierungen 12a, 12a' hingegen als ein gemeinsames Objekt gehandhabt. Zu diesem Zweck wird die in Fig. 3 rechte Fahrspurmarkierung 12a als Master-Markierung bestimmt und die linke Fahrspurmarkierung 12a' wird als Slave-Markierung bestimmt. Die Messwerte werden nun lediglich der Master-Markierung zugeordnet und an die Slave-Markierung einfach weitergereicht, sodass die beiden überlappenden Fahrspurmarkierungen 12a, 12a' nicht mehr um die Zuordnung von Messwerten konkurrieren. Es wird auch nur die Master-Markierung für eine etwaige Anzeige verwendet. Die beiden überlappenden Fahrspurmarkierungen 12a, 12a' konvergieren somit und liegen fortan übereinander, wobei bei einem Vorüberfahren des Kraftfahrzeugs 10 an dem Verschmelzungspunkt 22 die Slave-Markierung 12a' aus der Liste entfernt wird. Ab diesem Zeitpunkt gibt es nämlich ohnehin nur noch eine Fahrspurmarkierung 12a. Die Handhabung von Verzweigungen erfolgt in analoger Weise.

Von besonderem Vorteil ist bei dem erfindungsgemäßen Verfahren die Einfachheit des Prozesses, bei welchem direkt aus den Messwerterkennungen eine relativ kleine Anzahl von Kontrollpunkten 18 extrahiert wird, welche ortsfest sind und die Ausgleichskurve selbst vollständig beschreiben. Die Flexibilität und Robustheit der Modellierung beruht insbesondere auf der geschickten Kopplung aus Spline-basierter mathematischer Beschreibung und unmittelbarer Messwert-basierter Kontrollpunktextraktion.

### Bezugszeichenliste

- 10: Kraftfahrzeug
- 11: Fahrspur
- 12a, 12a', 12b: Fahrspurmarkierung
- 14: Kamera
- 15: Sichtstrahl
- 16: Leitplanke
- 17: Messpunkt
- 18: Kontrollpunkt
- 20: erfasstes Bild
- 21: Spline
- 22: Verschmelzungspunkt

- W: Breite
- F: Fahrtrichtung

## Patentansprüche

1. Verfahren zum Erkennen und Verfolgen von Fahrspurmarkierungen (12a, 12b) von einem Kraftfahrzeug (10) aus, an welchem eine Bilderfassungseinrichtung (14) angeordnet ist, wobei
mittels der Bilderfassungseinrichtung (14) in regelmäßigen Zeitabständen ein Bild (20) eines vor dem Kraftfahrzeug (10) befindlichen Verkehrsraumes erfasst wird,
mittels eines Bildverarbeitungssystems in dem erfassten Bild (20) Bildbereiche identifiziert werden, welche einer zu verfolgenden Fahrspurmarkierung (12a, 12b) entsprechen;
ein Satz von Kontrollpunkten (18) definiert wird, welche sich auf einem geschätzten Verlauf der Fahrspurmarkierung (12a, 12b) in der Fahrbahnebene befinden; und
die zeitliche Änderung des Verlaufs der Fahrspurmarkierung (12a, 12b) mittels eines Zustandsschätzers verfolgt wird, der einen Zustandsvektor verwendet, dessen Komponenten zumindest den Satz von Kontrollpunkten (18) umfassen;
wobei das Verfolgen der zeitlichen Änderung des Verlaufs der Fahrspurmarkierung (12a, 12b) durch den Zustandsschätzer die Schritte umfasst, dass
eine Vorhersage für den Zustandsvektor generiert wird;
die Vorhersage anhand eines Splines (21), welcher durch die Kontrollpunkte (18) verläuft und durch deren Lage in der Fahrbahnebene vollständig definiert ist, mit der in einem zeitlich nachfolgenden Bild (20) identifizierten Fahrspurmarkierung (12a, 12b) verglichen wird; und
der Zustandsvektor anhand des Ergebnisses des Vergleichs aktualisiert wird.

2. Verfahren nach Anspruch 1,
**dadurch gekennzeichnet, dass** der Zustandsvektor als zusätzliche Komponente einen Wert für die Breite (W) der zu verfolgenden Fahrspurmarkierung (12a, 12b) enthält, wobei insbesondere der Zustandsvektor als Komponenten ausschließlich den Satz von Kontrollpunkten (18) und den Wert für die Breite (W) der zu verfolgenden Fahrspurmarkierung (12a, 12b) enthält.

3. Verfahren nach einem der vorstehenden Ansprüche,
**dadurch gekennzeichnet, dass** beim Identifizieren der Bildbereiche jeweils einzelne Teilstücke der zu verfolgenden Fahrspurmarkierung (12a, 12b) erkannt werden, wobei der Satz von Kontrollpunkten (18) anhand der erkannten Teilstücke definiert wird.

4. Verfahren nach einem der vorstehenden Ansprüche,
**dadurch gekennzeichnet, dass** als Spline (21) ein lokaler Spline, insbesondere ein Catmull-Rom-Spline, verwendet wird.

5. Verfahren nach einem der vorstehenden Ansprüche,
**dadurch gekennzeichnet, dass** die Kontrollpunkte (18) einer Eigenbewegungskompensation unterzogen werden, welche insbesondere auf einem linearen Bewegungsmodell beruht.

6. Verfahren nach einem der vorstehenden Ansprüche,
**dadurch gekennzeichnet, dass** bei einem Vorüberfahren des Kraftfahrzeugs (10) an einem Kontrollpunkt (18) dieser Kontrollpunkt aus dem Zustandsvektor entfernt wird, die verbleibenden Kontrollpunkte (18) um eine Komponentenposition in dem Zustandsvektor verschoben werden und ein neuer Kontrollpunkt in den Zustandsvektor eingefügt wird, welcher sich in Fahrtrichtung (F) gesehen vor den verbleibenden Kontrollpunkten (18) befindet.

7. Verfahren nach Anspruch 6,
**dadurch gekennzeichnet, dass** der neue Kontrollpunkt durch eine Extrapolation des Splines (21) ermittelt wird.

8. Verfahren nach Anspruch 6 oder 7,
**dadurch gekennzeichnet, dass** jedem Kontrollpunkt (18) ein Rauschterm zugeordnet wird, welcher ein Maß für die Unsicherheit der Position des Kontrollpunkts bezüglich der tatsächlichen Position der Fahrspurmarkierung darstellt, wobei für den neuen Kontrollpunkt einerseits und für die verbleibenden Kontrollpunkte andererseits jeweils unterschiedliche Rauschterme gewählt werden.

9. Verfahren nach einem der vorstehenden Ansprüche,
**dadurch gekennzeichnet, dass** dem Spline (21) mittels einer Extrapolation ein oder mehrere Kurvenabschnitte hinzugefügt werden, welche den geschätzten Verlauf der Fahrspurmarkierung (12a, 12b) vor dem ersten Kontrollpunkt und/oder nach dem letzten Kontrollpunkt darstellen.

10. Verfahren nach einem der Ansprüche 6 bis 9,
**dadurch gekennzeichnet, dass** der Extrapolation eine sich am Ende des Definitionsbereichs des Splines (21) gleichmäßig fortsetzende Krümmung des geschätzten Verlaufs der Fahrspurmarkierung (12a, 12b) zugrundegelegt wird.

11. Verfahren nach einem der vorstehenden Ansprüche,
**dadurch gekennzeichnet, dass** das Identifizieren von einer zu verfolgenden Fahrspurmarkierung (12a, 12a') entsprechenden Bildbereichen in dem erfassten Bild (20) umfasst, dass die identifizierten Bildbereiche jeweils einer von mehreren in einer Liste geführten Fahrspurmarkierungen (12a, 12a') zugeordnet werden, wobei bei einem Überlappen von zwei der in der Liste geführten Fahrspurmarkierungen (12a, 12a') ein den Beginn des Überlappens repräsentierender Kontrollpunkt als Verschmelzungspunkt (22) gespeichert wird und die beiden Fahrspurmarkierungen (12a, 12a') vor oder nach dem Verschmelzungspunkt fusioniert werden.

12. Verfahren nach Anspruch 11,
**dadurch gekennzeichnet, dass** das Fusionieren der beiden Fahrspurmarkierungen (12a, 12a') vor oder nach dem Verschmelzungspunkt (22) umfasst, dass eine Fahrspurmarkierung (12a) als zu verfolgende "Master"-Markierung bestimmt wird und die andere Fahrspurmarkierung (12a') als "Slave"-Markierung bestimmt wird, welche in der Liste beibehalten, aber bei dem Schritt des Identifizierens von einer Fahrspurmarkierung entsprechenden Bildbereichen nicht berücksichtigt wird.

13. Verfahren nach Anspruch 12,
**dadurch gekennzeichnet, dass** bei einem Vorüberfahren des Kraftfahrzeugs (10) an dem Verschmelzungspunkt (22) die "Slave"-Markierung (12a') aus der Liste entfernt wird.

14. Verfahren nach einem der vorstehenden Ansprüche,
**dadurch gekennzeichnet, dass** beim Definieren des Satzes von Kontrollpunkten (18) ein gleichmäßiger Abstand zwischen den Kontrollpunkten in der Fahrbahnebene gewählt wird, wobei die aktuelle Geschwindigkeit des Kraftfahrzeugs (10) ermittelt wird und der Abstand zwischen den Kontrollpunkten (18) in Abhängigkeit von der Geschwindigkeit gewählt wird.

15. Verfahren nach Anspruch 14,
**dadurch gekennzeichnet, dass** der Abstand von einem ersten höheren Betrag auf einen zweiten niedrigeren Betrag verringert wird, wenn die Geschwindigkeit des Kraftfahrzeugs (10) einen vorbestimmten Schwellenwert unterschreitet, wobei vorzugsweise der zweite Betrag der Hälfte des ersten Betrags entspricht.
